# EUROPÄISCHE PATENTSCHRIFT

(11) **EP 3 763 258 B1**
(45) Veröffentlichungstag und Bekanntmachung des Hinweises auf die Patenterteilung: **13.10.2021**
(21) Anmeldenummer: 20184625.0
(22) Anmeldetag: 08.07.2020
(51) Int. Cl.: A47J 31/44

(54) **VORRICHTUNG UND VERFAHREN ZUR ERZEUGUNG EINES SCHAUMFÖRMIGEN MILCH/LUFT-GEMISCHS**
DEVICE AND METHOD FOR PRODUCING A FOAM-LIKE MILK / AIR MIXTURE
DISPOSITIF ET PROCÉDÉ DE GÉNÉRATION D'UN MÉLANGE LAIT/AIR MOUSSEUX

(30) Priorität: 10.07.2019 DE 102019118680
(43) Veröffentlichungstag der Anmeldung: 13.01.2021
(73) Patentinhaber: FRANKE Kaffeemaschinen AG, 4663 Aarburg (CH)
(72) Erfinder: Hoch, Hans-Peter, 4805 Brittnau (CH)
(74) Vertreter: Lemcke, Brommer & Partner Patentanwälte Partnerschaft mbB

(56) Entgegenhaltungen:
- EP-A1- 2 042 063
- CH-A2- 711 865
- US-A1- 2018 231 410

## Beschreibung

Die vorliegende Erfindung betrifft eine Vorrichtung zur Erzeugung eines schaumförmigen Milch/Luft-Gemischs gemäß dem Oberbegriff des Anspruchs 1. Diese Vorrichtung weist eine Aufschäumeinheit, eine mit der Aufschäumeinheit fluidleitend verbundene Förderleitung zum Fördern von Milch aus einem Vorratsbehälter und Zuleiten der Milch in die Aufschäumeinheit, eine Luftzuleitung zum Beimischen von Luft in die Milch und einen in der Luftzuleitung angeordneten, steuerbaren Luftzufuhrbegrenzer auf. Weiterhin betrifft die vorliegende Erfindung ein Verfahren zur Erzeugung eines schaumförmigen Milch/Luft-Gemischs gemäß Anspruch 13 welches mit einer solchen Vorrichtung durchführbar ist.

Die Erzeugung eines schaumförmigen Milch/Luft-Gemischs bzw. Milchschaums für die Zubereitung von auf Kaffee basierenden Heiß- oder Kaltgetränken ist aus dem Stand der Technik hinlänglich bekannt. Zu diesen auf Kaffee basierenden Heiß- oder Kaltgetränken zählen unter anderem Cappuccino, Latte Macchiato, Milchkaffe und Eiskaffee. Bei der Beurteilung der Qualität dieser Getränke spielen insbesondere die Konsistenz, Cremigkeit und Standfestigkeit des schaumförmigen Milch/Luft-Gemischs eine große Rolle. Die Konsistenz, Cremigkeit und Standfestigkeit sind von einem Fett- und Proteingehalt der verwendeten Milchsorte, von einer Aufschäumtemperatur sowie von dem einem Luftgehalt des schaumförmigen Milch/Luft-Gemischs abhängig. Ein cremiger Milchschaum gelingt am besten mit Vollmilch. Für einen Milchschaum mit hoher Standfestigkeit ist fettarme Milch am besten geeignet. Je höher der Eiweißgehalt der verwendeten Milchsorte, desto standfester wird das schaumförmige Milch/Luft-Gemisch. Fettarme Milch nimmt im kalten Zustand die meiste Luft auf. Fettreiche Milch schäumt bei niedrigen bis mittleren Temperaturen sehr gut, wodurch ein sehr feiner und cremiger Milchschaum erzeugt werden kann.

Aus der DE 10 2017 123 642 A1 ist zur Einstellung des Luftgehalts in dem schaumförmigen Milch/Luft-Gemisch eine Vorrichtung bekannt, welche einen Milchgehalt in dem schaumförmigen Milch/Luft-Gemisch mittels der Förderleistung einer Pumpe und das der Milch beigemischte Luftvolumen mittels eines steuerbaren Ventils anpassen. In diesem Fall ist der Luftgehalt in dem schaumförmigen Milch/Luft-Gemisch jedoch abhängig von der Förderleistung der Pumpe und kann nicht dynamisch gesteuert werden. Eine weitere gattungsgemäße Vorrichtung ist aus der Druckschrift CH 711 865 bekannt.

Der vorliegenden Erfindung liegt daher die Aufgabe zugrunde, eine Vorrichtung und ein Verfahren zur Erzeugung eines schaumförmigen Milch/Luft-Gemischs anzugeben, welche die Bestimmung und dynamische Anpassung des Luftgehalts in dem schaumförmigen Milch/Luft-Gemisch ermöglichen, um dadurch die Konsistenz, Cremigkeit und Standfestigkeit des schaumförmigen Milch/LuftGemisch variieren zu können.

Diese Aufgabe wird gelöst durch eine Vorrichtung mit den Merkmalen des Anspruchs 1 und einem Verfahren mit den Merkmalen des Anspruchs 13. Vorteilhafte Ausführungsformen der Vorrichtung und bevorzugte Ausgestaltungen des erfindungsgemäßen Verfahrens sind den abhängigen Ansprüchen zu entnehmen.

Eine erfindungsgemäße Vorrichtung zur Erzeugung eines schaumförmigen Milch/Luft-Gemischs bzw. Milchschaums umfasst eine Aufschäumeinheit, eine mit der Aufschäumeinheit fluidleitend verbundene Förderleitung zum Ansaugen von Milch aus einem Vorratsbehälter und Zuleiten der Milch in die Aufschäumeinheit, eine Luftzuleitung zum Beimischen von Luft in die Milch und einen in der Luftzuleitung angeordneten, steuerbaren Luftzufuhrbegrenzer. Es ist hierbei wesentlich, dass die erfindungsgemäße Vorrichtung weiterhin einen in der Luftzuleitung angeordneten Sensor zur Bestimmung einer der Milch beigemischten Luftmenge und eine programmierbare Steuereinheit zur Anpassung der von dem Sensor bestimmten Luftmenge an einen von der Steuereinheit vorgegebenen Sollwert aufweist.

Die Aufschäumeinheit ist dazu ausgebildet, Milch über die Förderleitung aus dem Vorratsbehälter zu fördern bzw. anzusaugen, dieser angesaugten Milch Luft beizumischen und das dadurch gebildete Milch/Luft-Gemisch aufzuschäumen. Sie kann hierfür einteilig oder auch mehrteilig ausgebildet sein. Die Aufschäumeinheit ist fluidleitend mit der Förderleitung verbunden. Der Sensor bestimmt die Luftmenge, welche der Milch beigemischt wird. Die Milchfördermenge, d.h. die pro Zeiteinheit oder pro Ausgabemenge an schaumförmigem Luft/Milch-Gemisch angesaugte Milchmenge lässt sich aus der Förderleistung der Aufschäumeinheit ableiten. Da die angesaugte Milchmenge pro Zeiteinheit oder pro auszugebener Menge an schaumförmigen Milch/Luft-Gemisch bekannt ist, kann der Luftgehalt in dem schaumförmigen Milch/Luft-Gemisch anhand der geförderten Milchmenge und der der geförderten Milchfördermenge beigemischten und von dem Sensor bestimmten Luftmenge von der Steuereinheit berechnet werden. Durch diese Berechnung des Luftgehalts kann die Dichte des schaumförmigen Milch/Luft-Gemischs abgeleitet werden. Die Dichte und der Luftgehalt korrelieren dabei mit der Konsistenz, Cremigkeit und Standfestigkeit des schaumförmigen Milch/Luft-Gemischs. Der berechnete Luftgehalt wird mit einem in der Steuereinheit hinterlegten Sollwert für den Luftgehalt verglichen. Der Sollwert für den Luftgehalt korreliert mit dem Sollwert für die Luftmenge, welche der Milch beigemischt wird. Sofern der berechnete Luftgehalt von dem Sollwert für den Luftgehalt abweicht, wird die von dem Sensor bestimmte Luftmenge an den von der Steuereinheit vorgegebenen Sollwert für die Luftmenge angepasst. Dieser Luftzufuhrbegrenzer weist einen Lufteinlass und einen Luftauslass auf, welche jeweils mit der Luftzuleitung fluidleitend verbunden sind. Er ist solcherart steuerbar, dass ein Luftvolumenstrom, welcher den Luftzufuhrbegrenzer passiert, vermindert oder vergrößert werden kann.

Als Sensor dient erfindungsgemäß ein Volumenstromsensor, welcher das zur Erzeugung des schaumförmigen Milch/Luft-Gemischs erforderliche, geringe Luftvolumen optimal bestimmen kann. Der Volumenstromsensor erfasst den Volumenstrom der von dem Förderelement angesaugten Luft und gibt z.B. über einen Spannungsausgang ein Analog-Signal in Volt [V] aus. Aus diesem Analog-Signal kann die der Milch beigemischte Luftmenge bzw. das der Milch beigemischte Luftvolumen berechnet werden. Der Volumenstromsensor ist in der Luftzufuhrrichtung entweder vor dem Luftzufuhrbegrenzer oder zwischen dem Luftzufuhrbegrenzer und der Aufschäumeinheit angeordnet ist.

Der Volumenstromsensor verfügt über ein erstes Sensorelement zur Eingangstemperaturmessung und ein zweites Sensorelement zur Ausgangstemperaturmessung der an den beiden Sensorelementen vorbeiströmenden Luft. Beide Sensorelemente sind symmetrisch um ein Zentrum eines Heizelements, beispielsweise einer platinbeschichteten Thermistor-Folie angeordnet, welche auf einer Membran befestigt ist. Der Volumenstromsensor verfügt vorzugsweise auch über ein Umgebungstemperatursensorelement zur Messung der Umgebungstemperatur und/oder der Lufttemperatur.

Das Messprinzip dieses Volumenstromsensors zur Bestimmung des Luftvolumenstroms basiert im Wesentlichen darauf, dass sich die von der platinbeschichteten Thermistor-Folie erzeugte Hitze gleichmäßig um das Zentrum dieser Thermistor-Folie verteilt, wenn sich die Luft in einem statischen Zustand befindet. Der statische Zustand stellt den Zustand dar, in welchem keine Luft an dem Volumenstromsensor vorbeiströmt. In diesem Fall messen die beiden Sensorelemente zur Eingangstemperaturmessung und Ausgangstemperaturmessung dieselbe Temperatur bzw. haben denselben Widerstand. Wenn Luft an dem Volumenstromsensor vorbeiströmt, wird die gleichmäßige Temperaturverteilung der erhitzten Luft aufgehoben. In diesem Fall wird der Widerstand des zweiten Sensorelements zur Ausgangstemperaturmessung grösser als der Widerstand des ersten Sensorelements zur Eingangstemperaturmessung. Die Differenz zwischen den Widerständen beider Sensorelemente ist proportional zur Strömungsgeschwindigkeit der Luft. Anhand dieser Widerstandsmessung und ihrer Auswertung kann die Strömungsrichtung und Strömungsgeschwindigkeit des Luftvolumenstroms bestimmt werden. Das Umgebungstemperatursensorelement kann zum Ausgleich der Luft- und/oder Umgebungstemperatur verwendet werden.

Vorzugsweise kann weiter vorgesehen sein, dass der Volumenstromsensor einen als MEMS (engl. Akronym für micro electro mechanical system) integrierten Sensorchip umfasst. Der Volumenstromsensor weist einen Strömungskanal auf, in welchem der Sensorchip angeordnet ist. Die angesaugte Luft strömt dabei durch den Strömungskanal des Volumenstromsensors vorbei an dem Sensorchip.

Ein weiterer Aspekt der Erfindung sieht ein Verfahren zur Erzeugung eines schaumförmigen Milch/Luft-Gemischs vor. Dieses Verfahren ist mit der zuvor genannten Vorrichtung sowie ihren nachfolgend genannten, vorteilhaften Ausführungsformen durchführbar und umfasst die folgenden Verfahrensschritte: In einem Verfahrensschritt (a) wird Milch über eine Förderleitung aus einem Vorratsbehälter angesaugt und in eine Aufschäumeinheit geleitet. Dieser Milch wird in einem zweiten Verfahrensschritt (b) Luft beigemischt. In einem weiteren Verfahrensschritt (c) wird eine der Milch beigemischten Luftmenge mit einem in der Luftzuleitung angeordneten Sensor bestimmt. Mit Hilfe einer Steuereinheit wird die von dem Sensor bestimmte Luftmenge in dem schaumförmigen Milch/LuftGemisch in einem Verfahrensschritt (d) an einen von einer Steuereinheit vorgegebenen Sollwert anpasst. In einem Verfahrensschritt (e) wird das Milch/LuftGemisch mit der Aufschäumeinheit aufgeschäumt. Die Verfahrensschritte (a), (b), (c), (d) und/oder (e) können im Wesentlichen parallel bzw. gleichzeitig oder zeitlich versetzt durchgeführt werden. Dieses Verfahren ermöglicht einerseits, die der Milch beigemischten Luftmenge zu bestimmen und andererseits die Konsistenz, Cremigkeit und Standfestigkeit des schaumförmigen Milch/Luft-Gemischs durch ein dynamisches Anpassen dieser Luftmenge an einen Sollwert während der Erzeugung des schaumförmigen Milch/Luft-Gemischs optimal einzustellen.

Erfindungsgemäß wird die Luftmenge in dem Verfahrensschritt c) anhand des der Milch zugeführten Luftvolumens bestimmt wird, welches mit einem Volumenstromsensor ermittelt wird, indem die vorbeiströmende Luft mit einem Heizelement erhitzt und mit einem ersten in Luftströmungsrichtung vor dem Heizelement und einem zweiten in Luftströmungsrichtung hinter dem Heizelement angeordneten Temperatursensor eine Temperaturdifferenz zwischen den beiden Temperatursensoren ermittelt wird.

In einer ersten vorteilhaften Ausführungsform der erfindungsgemäßen Vorrichtung weist die Aufschäumeinheit eine mit der Förderleitung fluidleitend verbundene erste steuerbare Pumpe und ein druckseitig der ersten Pumpe angeordnetes Druckerhöhungselement auf. Die Luftzuleitung mündet in dieser vorteilhaften Ausgestaltung saugseitig der ersten Pumpe in die Förderleitung. Indem die erste steuerbare Pumpe Milch über die Förderleitung ansaugt und der Aufschäumeinheit zuleitet, entsteht saugseitig der ersten Pumpe ein Unterdruck in der Förderleitung und in der Luftzuleitung. Dieser Unterdruck führt auch dazu, dass Luft aus der Luftzuleitung von der ersten Pumpe angesaugt und der Milch, welche durch die Förderleitung fließt, beigemischt wird. Aufgrund dessen kann bei dieser vorteilhaften Ausgestaltung auf ein separates Luftförderelement für das Beimischen der Luft verzichtet werden. Die der Milch beigemischte Luftmenge wird dabei von dem steuerbaren Luftzufuhrbegrenzer begrenzt. Das dadurch gebildete Milch/Luft-Gemisch wird in der ersten Pumpe zu dem schaumförmigen Milch/Luft-Gemisch verarbeitet. Das druckseitig der ersten Pumpe angeordnete Druckerhöhungselement wirkt als Fließwiderstand und erhöht dadurch den Gegendruck gegen den die erste Pumpe arbeiten muss und dabei das schaumförmige Milch/Luft-Gemisch im Inneren des Förderelements durchwälzt. In diesem Fall hängen die Konsistenz, Cremigkeit und Standfestigkeit des schaumförmigen Milch/Luft-Gemischs von der Förderleistung der ersten Pumpe gegen den von dem Druckerhöhungselement erzeugten Gegendruck ab. Wesentlich hierbei ist, dass das Druckerhöhungselement so ausgelegt und dimensioniert ist, dass es am Ausgang der ersten Pumpe einen ausreichend hohen Gegendruck erzeugt, gegen den die erste steuerbare Pumpe arbeiten muss.

Die Aufschäumeinheit umfasst in einer zweiten vorteilhaften Ausgestaltung der erfindungsgemäßen Vorrichtung eine zweite steuerbare Pumpe, welche saugseitig mit der Förderleitung fluidleitend verbunden ist, und eine druckseitig der zweiten Pumpe angeordnete Aufschäumkammer. Die zweite Pumpe ist dazu ausgebildet, Milch über die Förderleitung aus dem Vorratsbehälter zu fördern bzw. anzusaugen und der Aufschäumkammer zuzuleiten. Die Aufschäumkammer dient zur Schaumentwicklung bei dem Milch/Luft-Gemisch. Sie ist hierfür fluidleitend mit einer Dampfzuleitung verbunden, in welche die Luftzuleitung mündet. Über die Dampfzuleitung wird der Aufschäumkammer heißer Wasserdampf zugeleitet. Das Zuleiten des Wasserdampfs über die Dampfzuleitung in die Aufschäumkammer führt zu einem Unterdruck in der Luftzuleitung und einem damit verbundenen Ansaugen der Luft aus der Luftzuleitung in die Dampfzuleitung aufgrund des Venturieffekts, wodurch ein heißes Wasserdampf/LuftGemisch gebildet wird. Somit kann für das Beimischen der Luft in den heißen Wasserdampf auf ein separates Luftförderelement verzichtet werden. Das heiße Wasserdampf/Luft-Gemisch wird der Aufschäumkammer über die Dampfzuleitung zugeführt und mit der der Aufschäumkammer zugeleiteten Milch vermischt. Dadurch wird ein warmes, schaumförmiges Milch/Luft-Gemisch in der Aufschäumkammer gebildet.

Saugseitig der ersten und/oder der zweiten Pumpe kann ein erstes Rückschlagventil in der Förderleitung angeordnet sein, um ein Rückfließen der Milch in den Vorratsbehälter nach beendeter Erzeugung des schaumförmigen Milch/Luft-Gemischs zu vermeiden. Die Vorrichtung kann einen zusätzlichen Kühlschrank aufweisen, in welchem der Vorratsbehälter mit der Milch aufbewahrt wird, um eine Lagerfähigkeit der Vorrichtung für Milch zu verbessern. Um eine Verschmutzung des Luftzufuhrbegrenzers mit Milch zu vermeiden, kann in Luftzufuhrrichtung hinter dem Luftzufuhrbegrenzer ein zweites Rückschlagventil in der Luftzuleitung angeordnet sein. Dieses zweite Rückschlagventil verhindert das Eindringen der Milch in den Luftzufuhrbegrenzer. Der Volumenstromsensor ist in Luftzufuhrrichtung vor dem ersten Rückschlagventil angeordnet. Hierdurch wird ein Verschmutzen des Volumenstromsensors verhindert.

In einer ersten vorteilhaften Ausgestaltung des erfindungsgemäßen Verfahrens wird die der Milch beigemischten Luftmenge anhand des der Milch zugeführten Luftvolumens bestimmt, welches mit einem Volumenstromsensor ermittelt wird. Das bedeutet, dass der Volumenstromsensor den Luftvolumenstrom misst, welcher durch die Luftzuleitung fließt bzw. von der Aufschäumeinheit angesaugt wird. Anhand des gemessenen Luftvolumenstroms lässt sich das der Milch beigemischte Luftvolumen bestimmen. Wie bereits zuvor erläutert, kann der Luftgehalt in dem schaumförmigen Milch/Luft-Gemisch anhand der geförderten Milchmenge und der der geförderten Milchmenge beigemischten Luftmenge von der Steuereinheit berechnet werden. Durch diese Berechnung des Luftgehalts kann die Dichte des schaumförmigen Milch/Luft-Gemischs abgeleitet werden. Die Dichte korreliert mit der Konsistenz, Cremigkeit und Standfestigkeit des schaumförmigen Milch/Luft-Gemischs.

Um eine hohe Messgenauigkeit des Luftvolumenstroms auch bei einem geringen Luftvolumenstrom zu gewährleisten, weist der Luftvolumenstromsensor in einer weiteren vorteilhaften Ausführungsform einen Messbereich zur Messung des Luftvolumenstroms von -3 bis 3 l/min, bevorzugt von -2 bis 2 l/min, besonders bevorzugt von -1 bis 1 l/min auf. Das bedeutet, dass der Luftvolumenstromsensor in Luftzufuhrrichtung einen Messbereich von 0 bis 3 l/min, bevorzugt von 0 bis 2 l/min, besonders bevorzugt von 0 bis 1 l/min aufweist.

Der Luftvolumenstrom durch den Luftzufuhrbegrenzer und/oder die der Aufschäumeinheit zugeleiteten Milchfördermenge sind in einer weiteren vorteilhaften Ausführungsform der erfindungsgemäßen Vorrichtung zur Anpassung des Luftgehalts in dem schaumförmigen Milch/Luft-Gemisch an den Sollwert variierbar. Diese Variation erfolgt durch die Steuereinheit. Die Steuerung des Luftzufuhrbegrenzers ermöglicht eine dynamische Anpassung des Luftvolumenstroms und damit das der Milch beigemischte Luftvolumen pro Zeiteinheit. Die Milchfördermenge kann durch eine Anpassung der Förderleistung der ersten Pumpe oder der zweiten Pumpe erfolgen.

In einer zweiten vorteilhaften Ausgestaltung des erfindungsgemäßen Verfahrens variiert die Steuereinheit den Luftvolumenstrom durch einen in der Luftzuleitung angeordneten, steuerbaren Luftzufuhrbegrenzer und/oder eine von der Aufschäumeinheit geförderten Milchfördermenge, um die Luftmenge in dem schaumförmigen Milch/Luft-Gemisch an den Sollwert anzupassen. Sowohl in dem Fall, in dem die Aufschäumeinheit eine erste steuerbare Pumpe und eine druckseitig dieser ersten Pumpe angeordnete Aufschäumkammer umfasst, als auch in dem Fall, in dem die Aufschäumeinheit eine mit der Förderleitung fluidleitend verbundene zweite steuerbare Pumpe und ein druckseitig dieser zweiten Pumpe angeordnetes Druckerhöhungselement aufweist, kann die Milchfördermenge durch Anpassung der Förderleistung der ersten Pumpe bzw. der zweiten Pumpe mittels der Steuereinheit erfolgen. Die Variation des Luftvolumenstroms und/oder der Milchfördermenge erlaubt eine dynamische Anpassung des Luftgehalts in dem schaumförmigen Milch/Luft-Gemisch während der Herstellung des schaumförmigen Milch/Luft-Gemischs.

Der Luftzufuhrbegrenzer ist in einer weiteren vorteilhaften Ausführungsform der erfindungsgemäßen Vorrichtung ein Luftventil, insbesondere ein Stetigventil oder ein intermittierendes Luftventil. Bei einem Stetigventil lässt sich ein Öffnungsquerschnitt einer Ventilöffnung verengen oder erweitern, um die Luftzufuhr, das heißt den Luftvolumenstrom entsprechend zu drosseln oder zu erhöhen. Mit einem intermittierenden Luftventil, d.h. mit einem in schneller Folge öffnenden und schließenden Magnetventil lässt sich durch eine getaktete Ansteuerung das der Milch beigemischte Luftvolumen steuern. Die mittlere Taktfrequenz, mit welcher das intermittierende Luftventil angesteuert wird, liegt vorzugsweise zwischen 5 und 20 Hz, insbesondere bei 10 Hz. Diese Taktfrequenz kann zur Anpassung des Luftgehalts in dem Milch/Luft-Gemisch entsprechend variiert werden. Weiterhin besteht die Möglichkeit, die Taktfrequenz des intermittierenden Luftventils konstant zu halten und das Tastverhältnis, d.h. das Verhältnis zwischen einem geöffnetem Zustand und einem geschlossenen Zustand des intermittierenden Luftventils zu variieren. Im offenen Zustand fließt Luft durch das intermittierende Luftventil. Im geschlossenen Zustand blockiert das intermittierende Luftventil den Luftvolumenstrom. Durch wiederholtes Umschalten zwischen dem geschlossenen und dem geöffneten Zustand des intermittierenden Luftventils ist der mittlere Luftvolumenstrom durch das Luftventil steuerbar.

In einer weiteren vorteilhaften Ausführungsform der erfindungsgemäßen Vorrichtung ist die erste steuerbare Pumpe oder die zweite steuerbare Pumpe als Zahnradpumpe ausgebildet. Die Variation der Milchfördermenge ist durch die Steuerung einer Pumpendrehzahl der Zahnradpumpe, insbesondere mittels Pulsweitenmodulation, durchführbar. Die Verwendung einer Zahnradpumpe als zweite steuerbare Pumpe erlaubt die Erzeugung eines schaumförmigen Milch/Luft-Gemischs mit noch höherer Cremigkeit und Standfestigkeit. Der Grund hierfür ist, dass die Zahnräder der Zahnradpumpe zu einer intensiven Durchmischung des Milch/Luft-Gemischs und einer damit verbundenen feinen Verteilung von Luftbläschen in der Milch führen.

Wie bereits zuvor erwähnt, ist die Milchfördermenge aus der Förderleistung der Aufschäumeinheit bzw. der ersten oder zweiten Pumpe bekannt. Um jedoch die Genauigkeit der Bestimmung der Luftmenge, welche der Milch beigemischt wird, noch weiter zu verbessern, ist es erforderlich, die tatsächliche Milchfördermenge der Aufschäumeinheit bzw. der ersten oder zweiten Pumpe zu bestimmen. Aufgrund dessen ist in einer weiteren vorteilhaften Ausführungsform der erfindungsgemäßen in Milchförderrichtung vor der Aufschäumeinheit, vorzugsweise saugseitig der ersten Pumpe oder der zweiten Pumpe ein Durchflussmesser in der Förderleitung zur Bestimmung der Milchfördermenge angeordnet. Die vom Durchflussmesser bestimmte Milchfördermenge ermöglicht eine noch genauere Anpassung der der Milch beigemischten Luftmenge und damit des Luftgehalts in dem schaumförmigen Milch/Luft-Gemisch.

Das Druckerhöhungselement ist in einer weiteren vorteilhaften Ausführungsform der erfindungsgemäßen Vorrichtung als statischer Mischer, insbesondere als Wendelmischer, als Widerstandsdurchlasselement oder als Drossel ausgebildet. Ein Wendelmischer ist ein sogenannter statischer Mischer, bei dem in ein rohrförmiges Gehäuse mehrere hintereinander angeordnete, gegeneinander jeweils um 90° versetzte 180°-Wendel angeordnet sind. Außerdem haben die aufeinanderfolgenden Wendel jeweils eine gegenläufige Drehrichtung. Jeder Wendel teilt den Strom der durchströmenden Flüssigkeit in zwei Teilströme. Diese werden an jedem Übergang zum jeweils folgenden Wendel wiederum in zwei Teilströme aufgeteilt und jeweils mit Teilströmen aus dem vorangegangenen Wendel zusammengeführt. Auf diese Weise erfolgt eine Durchmischung des Flüssigkeitsstroms. Außerdem stellt der Wendelmischer einen weitgehend laminaren Strömungswiderstand dar, ohne dass hierbei der Durchflussquerschnitt verringert werden müsste.

Insbesondere dann, wenn die Aufschäumeinheit die zweite steuerbare Pumpe und das Druckerhöhungselement umfasst, wird von der Vorrichtung nur ein kaltes, schaumförmiges Milch/Luft-Gemisch erzeugt. Aber auch im Fall des Aufschäumens mittels Wasserdampf kann es wünschenswert sein, das schaumförmige Milch/Luft-Gemisch vor seiner Ausgabe in ein entsprechendes, vom Benutzer bereitgestelltes Trinkgefäß zusätzlich zu erwärmen. Aufgrund dessen sieht eine weitere vorteilhafte Ausführungsform der erfindungsgemäßen Vorrichtung vor, dass ein Durchlauferhitzer und/oder ein Wasserdampfeinlass in Ausgaberichtung für das schaumförmige Milch/Luft-Gemisch hinter der Aufschäumeinheit angeordnet ist, welches das schaumförmige Milch/Luft-Gemisch erwärmt. Vorzugsweise ist der Durchlauferhitzer und/oder der Wasserdampfeinlass in der Ausgaberichtung hinter der Aufschäumkammer oder hinter dem Druckerhöhungselement angeordnet. Als Durchlauferhitzer kann ein schnell heizender Durchlauferhitzer mit niedriger thermischer Masse in Form einer sogenannten Heizpatrone verwendet werden. Diese Heizpatrone erfasst einen sich symmetrisch entlang der Längsachse erstreckenden, vorzugsweise zylindrischen Innenkörper, der eine Heizung aufweist, sowie eine den Innenkörper umgebende Außenhülle, wobei zwischen Innenkörper und Außenhülle ein wendelförmig um den Innenkörper umlaufender und von der Außenhülle begrenzter Strömungskanal für das durchströmende schaumförmige Milch/Luft-Gemisch ausgebildet ist. Ein solcher Durchlauferhitzer benötigt eine nur geringe Vorwärmzeit.

Der Sollwert der Luftmenge, welche der Milch beigemischt wird, ist in einer weiteren vorteilhaften Ausführungsform der erfindungsgemäßen Vorrichtung in Abhängigkeit von einer zur Erzeugung des Milch/Luft-Gemischs verwendeten Milchsorte und/oder Milchtemperatur und/oder von einer von einem Benutzer ausgewählten Getränkesorte einstellbar. Wie bereits zuvor erwähnt, haben der Proteingehalt, der Fettgehalt und die Temperatur der zur Erzeugung des schaumförmigen Milch/Luft-Gemischs verwendeten Milch einen großen Einfluss auf dessen Dichte, Konsistenz, Cremigkeit und Standfestigkeit. Diese Dichte, Konsistenz, Cremigkeit und Standfestigkeit spielen zudem eine wichtige Rolle bei der vom Benutzer ausgewählten Getränkesorte. Beispielsweise wird zur Herstellung eines Cappuccinos ein schaumförmiges Milch/Luft-Gemisch mit einer eher festen Konsistenz und hohen Standfestigkeit benötigt. Im Vergleich dazu findet ein schaumförmiges Milch/Luft-Gemisch mit einer eher flüssigen Konsistenz bei der Herstellung von Milchkaffee Anwendung. Der Sollwert für jede Getränkesorte und/oder jede Milchsorte und/oder jede Milchtemperatur ist in der Steuereinheit der Vorrichtung hinterlegt und basiert auf Messungen des Herstellers. Im Rahmen dieser Messungen wurde die Standfestigkeit des schaumförmigen Milch/Luft-Gemischs in Abhängigkeit von dem der Milch zugeführten Luftgehalt bzw. Luftvolumen für unterschiedliche Getränkesorten und/oder bei verschiedenen Milchsorten und/oder bei verschiedenen Milchtemperaturen gemessen. Zur Bestimmung der Milchtemperatur kann der Vorratsbehälter und/oder die Förderleitung einen Temperatursensor aufweisen.

Die genannte Vorrichtung zur Erzeugung von Milchschaum wird vorzugsweise in einem Getränkeautomaten zur Ausgabe milchhaltiger Getränke eingesetzt, insbesondere in einem Kaffeevollautomaten zur Zubereitung und Ausgabe unterschiedlicher Kaffeegetränke und anderer Heißgetränke wie beispielsweise Cappuccino, Latte Macchiato, Milchkaffe und heißer Schokolade.

Weitere Vorteile und Ausgestaltungen der Erfindung ergeben sich aus der nachfolgenden Beschreibung von Ausführungsbeispielen anhand der Figuren. Hierbei zeigen:
- Figur 1: ein Flussschema eines ersten Ausführungsbeispiels der erfindungsgemäßen Vorrichtung zur Erzeugung eines schaumförmigen Milch/Luft-Gemischs;
- Figur 2: eine schematische Darstellung des im ersten Ausführungsbeispiel der erfindungsgemäßen Vorrichtung zur Erzeugung des schaumförmigen Milch/Luft-Gemischs verwendeten Volumenstromsensors;
- Figur 3: ein Detail des in Figur 2 dargestellten Volumenstromsensors;
- Figur 4: ein Flussschema eines zweiten Ausführungsbeispiels der erfindungsgemäßen Vorrichtung zur Erzeugung des schaumförmigen Milch/Luft-Gemischs und
- Figur 5: einen Ablaufplan eines ersten Ausführungsbeispiels des erfindungsgemäßen Verfahren zur Erzeugung des schaumförmigen Milch/Luft-Gemischs.

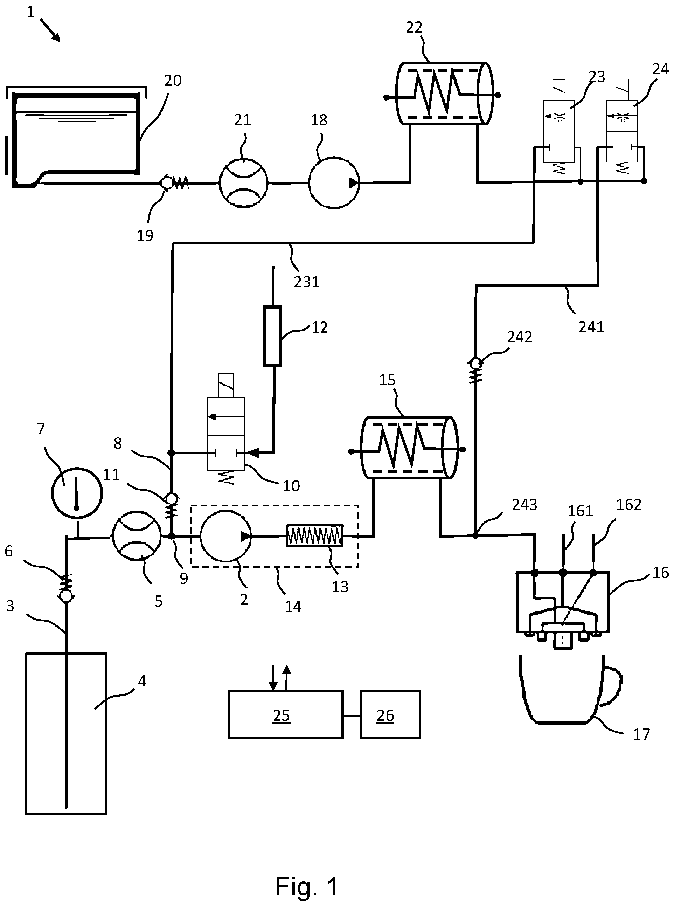

In Figur 1 ist ein Flussschema eines ersten Ausführungsbeispiels der erfindungsgemäßen Vorrichtung 1 zur Erzeugung eines schaumförmigen Milch/Luft-Gemischs darstellt. Die Vorrichtung 1 besitzt eine erste steuerbare Pumpe 2, die über eine Förderleitung 3 Milch aus einem Vorratsbehälter 4 ansaugt. Im vorliegenden Ausführungsbeispiel ist die erste Pumpe 2 als Zahnradpumpe ausgebildet. In der Förderleitung 3 befindet sich in Milchzufuhrrichtung vor der ersten Pumpe 2 ein Durchflussmesser 5 sowie ein erstes Rückschlagventil 6. Das erste Rückschlagventil 6 ist in Milchzufuhrrichtung zwischen dem Vorratsbehälter 4 und dem Durchflussmesser 5 angeordnet und verhindert, dass Milch aus der Förderleitung 3 zurück in den Vorratsbehälter 4 fließen kann. Die Förderleitung 3 weist zudem einen Temperatursensor 7 zur Bestimmung der Milchtemperatur auf. Zwischen der ersten Pumpe 2 und dem Durchflussmesser 5 mündet eine Luftzuleitung 8 über einen Lufteinlass 9 in die Förderleitung 3. In Luftzufuhrrichtung vor dem Lufteinlass 9 ist ein als intermittierend betriebenes Luftventil ausgebildeter Luftzufuhrbegrenzer 10 in der Luftzuleitung 8 angeordnet, welcher die Luftzufuhr zyklisch unterbricht bzw. freigibt. Außerdem befindet sich in der Luftzuleitung 8 ein zweites Rückschlagventil 11, das ein Eindringen von Milch in die Luftzuleitung 8 verhindert. Das zweite Rückschlagventil 11 ist in Luftzufuhrrichtung zwischen dem Luftzufuhrbegrenzer 10 und dem Lufteinlass 9 angeordnet.

In Luftzufuhrrichtung vor dem Luftzufuhrbegrenzer 10 ist ein als Volumenstromsensor ausgebildeter Sensor 12 angeordnet. Dieser Volumenstromsensor 12 misst den Luftvolumenstrom durch die Luftzuleitung 8 und bestimmt das über den Lufteinlass 9 der in der Förderleitung 3 angesaugten Milch pro Zeiteinheit beigemischte Luftvolumen. Im vorliegenden Ausführungsbeispiel weist der Volumenstromsensor 12 einen Messbereich zur Messung des Luftvolumenstroms von -1 bis 1 l/min auf.

Druckseitig der ersten Pumpe 2, also in Strömungsrichtung des schaumförmigen Milch/Luft-Gemischs hinter der ersten Pumpe 2, befindet sich ein Druckerhöhungselement 13, das als Wendelmischer ausgebildet ist. Der Wendelmischer 13 und die erste Pumpe 2 bilden eine Aufschäumeinheit 14 aus (in Figur 1 durch einen gestrichelten Rahmen gekennzeichnet). Das Druckerhöhungselement 13 dient dazu, am Ausgang der ersten Pumpe 2 einen Gegendruck zu erzeugen. Aufgrund dieses Gegendruckes, gegen den die erste Pumpe 2 arbeiten muss, wird das angesaugte Milch-/Luft-Gemisch gegen die Pumprichtung zwischen den Zahnrädern der als Zahnradpumpe ausgebildeten ersten Pumpe 2 hindurchgepresst und auf diese Weise zu einem sehr feinen schaumförmigen Milch/Luft-Gemisch verarbeitet. Der von der ersten Pumpe 2 am druckseitigen Ausgang erzeugte Förderdruck beträgt vorzugsweise zwischen 5 und 15 bar, insbesondere zwischen 8 und 12 bar. In diesem Druckbereich wird nach Untersuchungen der Anmelderin ein von der Konsistenz, Standfestigkeit und Cremigkeit hervorragendes schaumförmiges Milch/Luft-Gemisch erhalten.

In Flussrichtung hinter dem Druckerhöhungselement 13 befindet sich ein Durchlauferhitzer 15, mit dem das aus dem Druckerhöhungselement 13 austretende schaumförmige Milch/Luft-Gemisch erwärmt werden kann. Von dort gelangt das schaumförmige Milch/Luft-Gemisch zu einem Auslaufkopf 16, von dem es in ein darunter platziertes Trinkgefäß 17 ausgegeben wird. Der Auslaufkopf 16 verfügt über zwei weitere Zuläufe 161, 162, die an eine hier nicht gezeigte Brühvorrichtung eines Kaffeevollautomaten und einen Zubereiter für Instantgetränke angeschlossen wird. Das gezeigte Milchsystem ist Teil eines Kaffeevollautomaten, mit dem wahlweise unterschiedliche Kaffee- und Instantgetränke zubereitet werden können.

Soll über die Vorrichtung 1 kein schaumförmiges Milch/Luftgemisch, sondern warme oder kalte Milch ausgegeben werden, so wird lediglich des Luftzufuhrbegrenzer 10 geschlossen. Somit wird keine Luft angesaugt und es wird nur die aus dem Vorratsbehälter 4 geförderte bzw. angesaugte Milch ausgegeben. Diese kann wahlweise durch Einschalten des Durchlauferhitzers 15 erwärmt oder als kalte Milch ausgegeben werden.

Neben dem eigentlichen Milchsystem zur Erzeugung von Milchschaum ist in diesem ersten Ausführungsbeispiel außerdem ein zusätzliches System zum Erzeugen von Heißwasser vorgesehen, mit dem das Milchsystem gespült oder mit dem Wasserdampf erzeugt werden kann. Der Wasserdampf kann zur Nacherhitzung des warmen schaumförmigen Mich/Luft-Gemischs oder der warmen Milch verwendet werden. Hierzu ist eine Wasserpumpe 18 vorgesehen, die eingangsseitig über ein drittes Rückschlagventil 19 mit einem Wassertank 20 verbunden ist. Statt des Wassertanks 20 kann selbstverständlich auch ein Anschluss an eine Hauswasserleitung vorgesehen sein. Zwischen dem Rückschlagventil 19 und der Wasserpumpe 18 ist außerdem ein Durchflussmesser 21 vorgesehen, mit dem eine von der Wasserpumpe 18 angesaugte Wassermenge und eine Durchflussrate bestimmt werden kann. Druckseitig der Wasserpumpe 18 ist ein zweiter Durchlauferhitzer 22 angeordnet, der ähnlich aufgebaut ist wie der Durchlauferhitzer 15 für Milch. Mit diesem Durchlauferhitzer 22 für Wasser können wahlweise, je nach elektrischer Heizleistung, Heißwasser oder Wasserdampf erzeugt werden. In Flussrichtung hinter dem Durchlauferhitzer 22 befinden sich zwei Magnetventile 23, 24, über die Heißwasser oder Dampf zu dem Milchsystem geleitet werden kann.

Das erste Magnetventil 23 ist über eine Leitung 231 mit der Luftzuleitung 8 fluidleitend verbunden, sodass hierüber Heißwasser zum Spülen des Milchsystems zum Eingang der zweiten Pumpe 2 geleitet werden kann. Über das zweite Magnetventil 24 kann heißer Wasserdampf in Ausgaberichtung hinter dem Durchlauferhitzer 15 in die Leitung für das schaumförmige Milch/Luft-Gemisch eingespeist werden, um das im Durchlauferhitzer 15 erwärmte schaumförmige Milch/Luft-Gemisch zusätzlich zu erhitzen. Um zu verhindern, dass das schaumförmige Milch/Luft-Gemisch in das zweite Magnetventil 24 eindringt, ist in einer mit dem zweiten Magnetventil 24 verbundenen Leitung 241 ein viertes Rückschlagventil 242 angeordnet.

Die in Figur 1 dargestellte Vorrichtung 1 besitzt außerdem eine programmierbare Steuereinheit 25 und eine mit der Steuereinheit 25 verbundene Benutzerschnittstelle 26, beispielsweise in Form eines berührungsempfindlichen Displays oder einer anderweitigen Anzeige- und Eingabeeinheit. Über die Steuereinheit 25 werden die Funktionen der ersten Pumpe 2, des Luftzufuhrbegrenzers 10, des Durchlauferhitzers 15 für das schaumförmige Milch/Luft-Gemisch, des zweiten Durchlauferhitzers 22 für Wasser gesteuert. Außerdem liest die Steuereinheit 25 Messdaten des ersten Durchflussmessers 5, des Temperatursensors 7, des Volumenstromsensors 12 und des zweiten Durchflussmessers 21 aus und steuert die Förderleistung der ersten Pumpe 2, den Luftvolumenstrom durch den Luftzufuhrbegrenzer 10 und die Heizleistung des Durchlauferhitzers 15 für das schaumförmige Milch/Luft- Gemisch. Außerdem steuert die Steuereinheit 25 auch das Heißwassersystem, also die Wasserpumpe 18 und den Durchlauferhitzer 22 des Wassers sowie die entsprechenden Magnetventile 23 und 24 an, um das Milchsystem nach einem Produktbezug zu spülen oder, falls erforderlich, Heißdampf zur Nacherhitzung der auszugebenden Milch oder des auszugebenden schaumförmigen Milch/Luft-Gemischs zuzuleiten.

Vorzugsweise können über die Steuereinheit 25 auch die Funktionen des hier nicht näher dargestellten Kaffeevollautomaten, also die Zubereitung von Kaffeegetränken oder Instantgetränken, gesteuert werden.

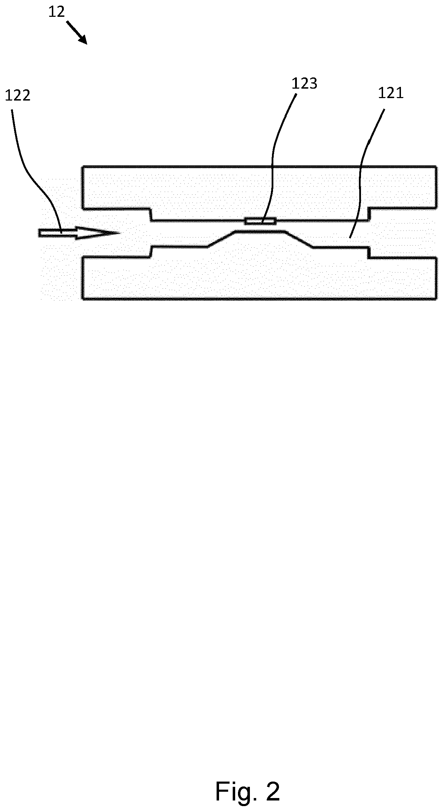

Figur 2 zeigt eine schematische Darstellung des im ersten Ausführungsbeispiel der erfindungsgemäßen Vorrichtung 1 zur Erzeugung des schaumförmigen Milch/Luft Gemischs verwendeten Volumenstromsensors 12. Dieser Volumenstromsensor 12 weist einen Strömungskanal 121 auf, durch welchen die angesaugte Luft durchströmen kann. Die Strömungsrichtung 122 der Luft ist in Figur 2 mit einem Pfeil 122 angedeutet. Der Volumenstromsensor umfasst weiterhin einen MEMS (engl. Akronym für micro electro mechanical system) Sensorchip 123, der in dem Strömungskanal 121 angeordnet ist.

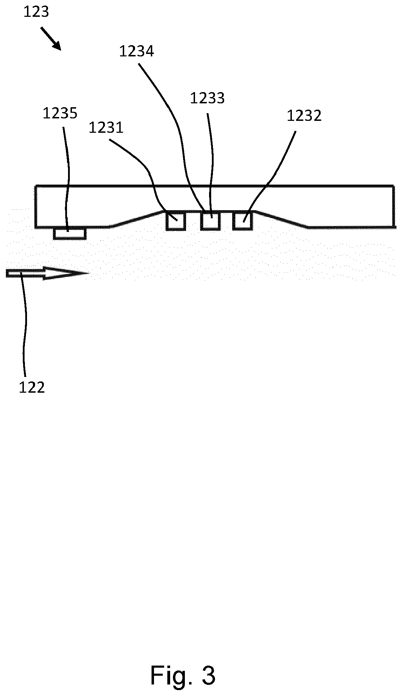

In Figur 3 ist eine detaillierte, schematische Darstellung des MEMS-Sensorchips 123 gezeigt. Dieser MEMS-Sensorchip 123 weist ein erstes Sensorelement 1231 zur Eingangstemperaturmessung und ein zweites Sensorelement 1232 zur Ausgangstemperaturmessung der an den beiden Sensorelementen 1231, 1232 vorbeiströmenden Luft auf. Das Ansaugen der Milch in der Förderleitung 3 durch die zweite Pumpe 2 führt - wie bereits zuvor erläutert - zum Ansaugen der Luft über den Lufteinlass 9 in die Förderleitung 3. Diese Luft strömt dabei durch den Strömungskanal 121 des Volumenstromsensors 12 vorbei an dem MEMS-Sensorchip 123. Das erste Sensorelement 1231 zur Eingangstemperaturmessung und das zweite Sensorelement 1232 zur Ausgangstemperaturmessung sind symmetrisch um ein Zentrum einer platinbeschichteten Thermistor-Folie 1233 angeordnet, welche auf einer Membran 1234 befestigt ist. Der MEMS-Sensorchip 123 verfügt außerdem über ein Umgebungstemperatursensorelement 1235 zur Messung der Umgebungstemperatur und der Lufttemperatur. Das Messprinzip dieses MEMS-Sensorchips 123 zur Bestimmung des Luftvolumenstroms basiert im Wesentlichen darauf, dass sich die von der platinbeschichteten Thermistor-Folie 1233 erzeugten Hitze gleichmäßig um das Zentrum dieser Thermistor-Folie 1233 verteilt, wenn sich die Luft in einem statischen Zustand befindet. Der statische Zustand stellt den Zustand dar, in welchem keine Luft an dem MEMS-Sensorchip 123 vorbeifließt. In diesem Fall haben die beiden Sensorelemente 1231, 1232 zur Eingangstemperaturmessung und Ausgangstemperaturmessung denselben Widerstand. Wenn Luft an dem MEMS-Sensorchip 123 vorbeiströmt, wird die gleichmäßige Temperaturverteilung der erhitzten Luft aufgehoben. In diesem Fall wird der Widerstand des zweiten Sensorelements 1232 zur Ausgangstemperaturmessung grösser als der Widerstand des ersten Sensorelements 1231 zur Eingangstemperaturmessung. Die Differenz zwischen den Widerständen beider Sensorelemente 1231, 1232 ist proportional zur Strömungsgeschwindigkeit der Luft. Anhand dieser Widerstandsmessung und ihrer Auswertung kann somit die Strömungsrichtung und Strömungsgeschwindigkeit des Luftvolumenstroms bestimmt werden. Das Umgebungstemperatursensorelement 1235 wird zum Ausgleich der Luft- und Umgebungstemperatur verwendet.

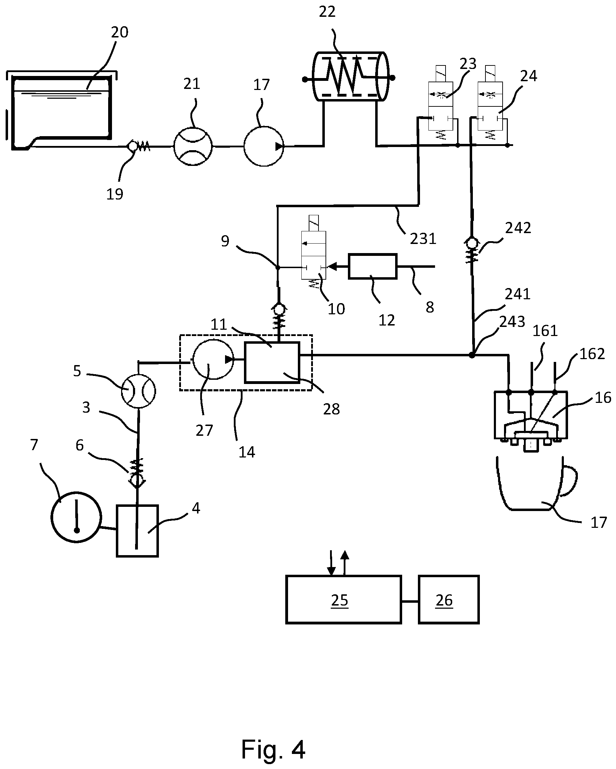

In Figur 4 ist ein Flussschema eines zweiten Ausführungsbeispiels der erfindungsgemäßen Vorrichtung 1 zur Erzeugung eines schaumförmigen Milch/Luft Gemischs darstellt. Dieses zweite Ausführungsbeispiel der erfindungsgemäßen Vorrichtung 1 unterscheidet sich von dem ersten Ausführungsbeispiel unter anderem dadurch, dass die Aufschäumeinheit 14 eine zweite Pumpe 27 und eine druckseitig der zweiten Pumpe 27 angeordnete Aufschäumkammer 28 umfasst. Die Aufschäumkammer 27 ist fluidleitend mit der Dampfzuleitung 231 verbunden, in welche die Luftzuleitung 8 über den Lufteinlass 9 mündet. Im Unterschied zum ersten Ausführungsbeispiel aus Figur 1 mündet die Luftzuleitung 8 somit nicht in der Förderleitung 3, sondern in der Dampfzuleitung 231. Wird über das erste Magnetventil 23 heißer Wasserdampf durch die Dampfzuleitung 231 geleitet, so sinkt der Druck in der Luftzuleitung 8, wodurch die Luft angesogen und mit dem Wasserdampf vermischt wird. In der Aufschäumkammer 28 trifft das Wasserdampf/Luft-Gemisch auf die Milch und ein warmes schaumförmiges Milch/Luft-Gemisch wird gebildet. Ein weiterer Unterschied zwischen dem ersten und dem zweiten Ausführungsbeispiel besteht darin, dass der Temperatursensor 7 im Vorratsbehälter 4 der Milch angeordnet ist.

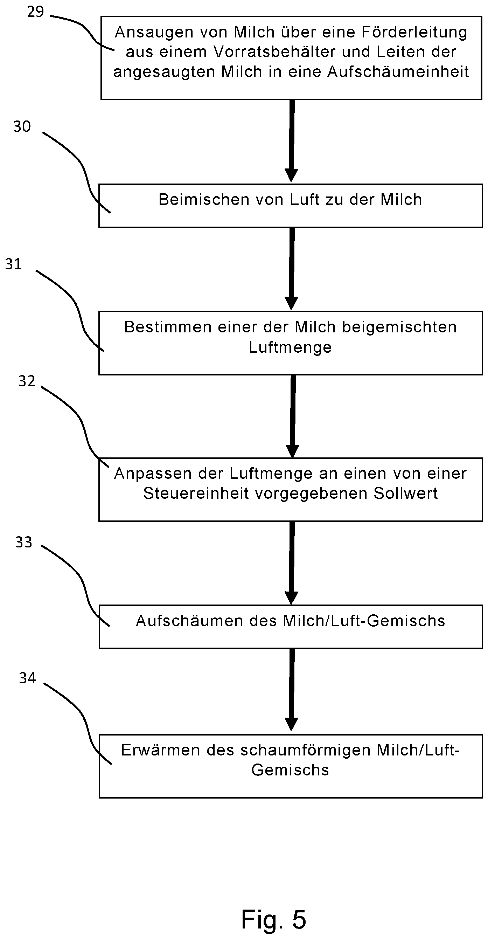

In Figur 5 ist der Ablauf eines Ausführungsbeispiels des erfindungsgemäßen Verfahrens zur Erzeugung des schaumförmigen Milch/Luft-Gemischs schematisch dargestellt, welcher anhand des zuvor erläuterten zweiten Ausführungsbeispiel der Vorrichtung 1 nachfolgend beschrieben wird.

In einem ersten Verfahrensschritt 29 wird Milch über die Förderleitung 3 aus dem Vorratsbehälter 4 von der ersten Pumpe 2 angesaugt bzw. gefördert. Die Förderleistung der ersten Pumpe 2 legt die über die Förderleitung 3 angesaugte Milchfördermenge pro Zeiteinheit fest. Dabei ist die für die jeweilige Getränkesorte erforderliche Milchfördermenge in der Steuereinheit 25 hinterlegt. Die tatsächliche Milchfördermenge wird mittels des Durchflussmessers 5 exakt bestimmt. Daraus kann auch die über die Förderleitung 3 angesaugte Milchfördermenge pro Ausgabemenge des schaumförmigen Milch/Luft-Gemischs bestimmt werden, welche über den Auslaufkopf 16 in das Trinkgefäß 17 ausgegeben wird. Kommt es zu einer Abweichung zwischen dem Sollwert für die Milchfördermenge und der tatsächlichen Milchfördermenge, erfolgt eine entsprechende Anpassung der Förderleistung der ersten Pumpe 2 durch die Steuereinheit 25.

Dieser Milch wird in einem zweiten Verfahrensschritt 30 Luft aus der Luftzuleitung 8 über den saugseitig der ersten Pumpe 21 angeordneten Lufteinlass 9 zur Erzeugung des Milch/Luft-Gemischs beigemischt. Das bedeutet, dass sobald die erste Pumpe 21 beginnt, Milch anzusaugen, entsteht in der Luftzuleitung 8 ein Unterdruck. Dieser Unterdruck führt dazu, dass auch Luft aus der Luftzuleitung 8 angesaugt und der Milch in der Förderleitung 3 beigemischt wird. Die angesaugte Luft fließt hierbei durch den Luftzufuhrbegrenzer 10, welcher in der Luftzuleitung 8 angeordnet ist und die der Milch beigemischte Luftmenge begrenzt. Der Luftzufuhrbegrenzer 10 ist im vorliegenden Ausführungsbeispiel als intermittierendes Luftventil ausgebildet. Dessen Tastverhältnis, d.h. das Verhältnis zwischen einem offenen Zustand, in welchem Luft durch das intermittierende Luftventil fließt, und einem geschlossenen Zustand, in welchem keine Luft durch das intermittierende Luftventil fließt, wird zur Anpassung des Luftvolumenstroms durch das intermittierende Luftventil von der Steuereinheit 25 festgelegt. Hierdurch kann die der Milch beigemischte Luftmenge dynamisch angepasst werden. Der erste und der zweite Verfahrensschritte 29, 30 laufen bei diesem Ausführungsbeispiel im Wesentlichen parallel ab.

In einem dritten Verfahrensschritt 31 wird die der Milch beigemischte Luftmenge mit dem an der Luftzuleitung 8 angeordneten Sensor 12 bestimmt. Der Sensor 12 ist im vorliegenden Ausführungsbeispiel als Volumenstromsensor ausgebildet. Dieser Volumenstromsensor 12 umfasst einen MEMS-Sensorchip, welcher den in den Figuren 2 und 3 beschriebenen Aufbau aufweist. Er erfasst den Volumenstrom der angesaugten Luft und gibt über einen Spannungsausgang ein Analog-Signal in Volt [V] aus. Dieses Analog-Signal wird von dem Volumenstromsensor 12 an die Steuereinheit 25 weitergeleitet. Die Steuereinheit 25 berechnet aus diesem Analog-Signal die der Milch beigemischte Luftmenge bzw. das der Milch beigemischte Luftvolumen. Im Ergebnis sind nun die von der ersten Pumpe 2 angesaugte Milchfördermenge und die dieser Milchfördermenge beigemischte Luftmenge bekannt, woraus sich der Luftgehalt in dem schaumförmigen Milch/Luft-Gemisch berechnen lässt.

Die Auswahl des vom Benutzer gewünschten milchschaumhaltigen Getränks legt die für die ausgewählte Getränkesorte erforderliche Konsistenz, Standfestigkeit und Cremigkeit des schaumförmigen Milch/Luft-Gemischs fest. Die Konsistenz, Standfestigkeit und Cremigkeit des schaumförmigen Milch/Luft-Gemischs korrelieren mit dem erforderlichen Luftgehalt des schaumförmigen Milch/Luft-Gemischs und somit mit der der Milch beigemischten Luftmenge. In der Steuereinheit 25 sind Sollwerte für den erforderlichen Luftgehalt des von der Vorrichtung 1 auszugebenden schaumhaltigen Milch/Luft-Gemischs und für die damit korrelierende, der Milch beizumischende Luftmenge hinterlegt. Die Steuereinheit 25 weist Sollwerte für eine der Vorrichtung im Vorratsbehälter 4 bereitgestellte Milchsorte, deren Milchtemperatur sowie die von dem Benutzer ausgewählte Getränkesorte auf. Die Milchsorte kann in ihrem Protein- und Fettgehalt variieren.

Weichen die von dem Sensor 12 bestimmte Luftmenge und der daraus berechnete Luftgehalt von den Sollwerten für die der Milch beizumischenden Luftmenge und den Luftgehalt des schaumförmigen Milch/Luft-Gemischs ab, so wird in einem vierten Verfahrensschritt 32 die der Milch beigemischte Luftmenge an den von der Steuereinheit 25 vorgegebenen Sollwert für die Luftmenge angepasst. Dies geschieht dadurch, dass der Luftvolumenstrom durch den Luftzufuhrbegrenzer 10 verändert wird, indem das Tastverhältnis des als intermittierendes Luftventil ausgebildeten Luftzufuhrbegrenzers 10 von der Steuereinheit 25 angepasst wird. Alternativ kann jedoch auch die Förderleistung der ersten Pumpe 2 oder sogar die Förderleistung und der Luftvolumenstrom angepasst werden.

In einem fünften Verfahrensschritt 33 wird das Milch/Luft-Gemisch von der Aufschäumeinheit 14, d.h. durch ein Zusammenspiel der ersten Pumpe 2 und des als Wendelmischer ausgebildeten Druckerhöhungselements 13 aufgeschäumt. In der ersten Pumpe 2 wird das gebildete Milch/Luft-Gemisch zunächst zu dem schaumförmigen Milch/Luft-Gemisch verarbeitet. Das druckseitig der ersten Pumpe 2 angeordnete Druckerhöhungselement 13 wirkt als Fließwiderstand und erhöht dadurch den Gegendruck gegen den die erste Pumpe 2 arbeiten muss und dabei das schaumförmige Milch/Luft-Gemisch im Inneren der ersten Pumpe 2 durchwälzt. Das Druckerhöhungselement ist so ausgelegt und dimensioniert, dass es am Ausgang der ersten Pumpe 2 einen ausreichend hohen Gegendruck erzeugt, gegen den die erste Pumpe 2 arbeiten muss. Hierdurch werden besonders feine Luftbläschen in dem schaumförmigen Milch/Luft-Gemisch erzeugt, wodurch die Konsistenz, Standfestigkeit und Cremigkeit des schaumförmigen Milch/Luft-Gemisch optimiert werden. Das als Wendelmischer ausgebildete Druckerhöhungselement 13 ist ein statischer Mischer, bei dem in ein rohrförmiges Gehäuse mehrere hintereinander angeordnete, gegeneinander jeweils um 90° versetzte 180°-Wendel angeordnet sind. Außerdem haben diese aufeinanderfolgende Wendel jeweils eine gegenläufige Drehrichtung. Jeder Wendel teilt den Strom der durchströmenden Flüssigkeit in zwei Teilströme. Diese werden an jedem Übergang zum jeweils folgenden Wendel wiederum in zwei Teilströme aufgeteilt und jeweils mit Teilströmen aus dem vorangegangenen Wendel zusammengeführt. Auf diese Weise erfolgt eine optimale Durchmischung des schaumförmigen Milch/Luft-Gemischs.

Bevor das schaumförmige Milch/Luft-Gemisch in das vom Benutzer bereitgestelltes Trinkgefäß ausgegeben wird, wird es von dem Durchlauferhitzer 15 in einem sechsten Verfahrensschritt 34 noch erwärmt, welcher ebenfalls von der Steuereinheit 25 steuerbar ist.

## Patentansprüche

1. Vorrichtung (1) zur Erzeugung eines schaumförmigen Milch/Luft-Gemischs mit einer Aufschäumeinheit (14), einer mit der Aufschäumeinheit (14) fluidleitend verbundenen Förderleitung (3) zum Ansaugen von Milch aus einem Vorratsbehälter (4) und Zuleiten der Milch in die Aufschäumeinheit (14), einer Luftzuleitung (8) zum Beimischen von Luft in die Milch und einem in der Luftzuleitung (8) angeordneten, steuerbaren Luftzufuhrbegrenzer (10), wobei
die Vorrichtung (1) einen in der Luftzuleitung (8) angeordneten Sensor (12) zur Bestimmung einer der Milch beigemischten Luftmenge und eine programmierbare Steuereinheit (25) zur Anpassung der von dem Sensor (12) bestimmten Luftmenge an einen von der Steuereinheit (25) vorgegebenen Sollwert aufweist,
**dadurch gekennzeichnet, dass**
der Sensor (12) ein Volumenstromsensor ist, welcher in der Luftzufuhrrichtung entweder vor dem Luftzufuhrbegrenzer (10) oder zwischen dem Luftzufuhrbegrenzer (10) und der Aufschäumeinheit (14) angeordnet ist, und der Volumenstromsensor (12) ein Heizelement (1233), einen ersten (1231) in Luftströmungsrichtung vor dem Heizelement und einen zweiten (1232) in Luftströmungsrichtung hinter dem Heizelement angeordneten Temperatursensor aufweist.

2. Vorrichtung (1) nach Anspruch 1, bei welcher die Aufschäumeinheit eine mit der Förderleitung (3) fluidleitend verbundene, erste steuerbare Pumpe (2) und ein druckseitig der ersten Pumpe (2) angeordnetes Druckerhöhungselement (13) aufweist, wobei die Luftzuleitung (8) saugseitig der ersten Pumpe (2) in die Förderleitung (3) mündet.

3. Vorrichtung (1) nach Anspruch 1, bei welcher die Aufschäumeinheit (14) eine zweite steuerbare Pumpe (27), welche saugseitig mit der Förderleitung (3) fluidleitend verbunden ist, und eine druckseitig der zweiten Pumpe (27) angeordnete Aufschäumkammer (28) umfasst, wobei die Aufschäumkammer (28) fluidleitend mit einer Dampfzuleitung (231) verbunden ist, in welche die Luftzuleitung (8) mündet.

4. Vorrichtung (1) nach einem der zuvor genannten Ansprüche, bei dem das Heizelement (1233), der erste (1231) und der zweite (1232) Temperatursensor zu einem MEMS Sensorchip (123) integriert sind.

5. Vorrichtung (1) nach Anspruch 1, bei welcher der Volumenstromsensor (12) einen Messbereich zur Messung eines Luftvolumenstroms von -3 bis 3 l/min, bevorzugt von -2 bis 2 l/min, besonders bevorzugt von -1 bis 1 l/min aufweist.

6. Vorrichtung (1) nach einem der zuvor genannten Ansprüche, bei welcher zur Anpassung der von dem Sensor (12) bestimmten Luftmenge an den Sollwert mittels der Steuereinheit (25) der Luftvolumenstrom durch den Luftzufuhrbegrenzer (10) und/oder eine der Aufschäumeinheit (14) zugeleiteten Milchfördermenge variierbar ist.

7. Vorrichtung (1) nach einem der zuvor genannten Ansprüche, bei welcher der Luftzufuhrbegrenzer (10) ein Luftventil, insbesondere ein Stetigventil oder ein intermittierendes Luftventil ist.

8. Vorrichtung (1) nach Anspruch 2 oder 3, bei welcher die erste steuerbare Pumpe (2) bzw. die zweite steuerbare Pumpe (27) als Zahnradpumpe ausgebildet ist, wobei die Variation der Milchfördermenge durch Steuerung einer Pumpendrehzahl der Zahnradpumpe, insbesondere mittels Pulsweitenmodulation, durchführbar ist.

9. Vorrichtung (1) nach einem der zuvor genannten Ansprüche, bei welcher in Milchförderrichtung vor der Aufschäumeinheit (14), vorzugsweise saugseitig der ersten Pumpe (2) oder der zweiten Pumpe (27) ein Durchflussmesser (5) in der Förderleitung (3) zur Bestimmung der Milchfördermenge angeordnet ist.

10. Vorrichtung (1) nach einem der Ansprüche 2 bis 9, bei welcher das Druckerhöhungselement (13) als statischer Mischer, insbesondere Wendelmischer, als Widerstandsdurchlasselement oder als Drossel ausgebildet ist.

11. Vorrichtung (1) nach einem der zuvor genannten Ansprüche, welche einen in Ausgaberichtung für das schaumförmige Mich/Luft-Gemisch hinter der Aufschäumeinheit (14) angeordneten Durchlauferhitzer (15) und/oder Wasserdampfeinlass (243) zum Erwärmen des schaumförmigen Milch/Luft-Gemischs aufweist.

12. Vorrichtung (1) nach einem der zuvor genannten Ansprüche, bei welcher der Sollwert in Abhängigkeit von einer zur Erzeugung des schaumförmigen Milch/Luft-Gemischs verwendeten Milchsorte und/oder Milchtemperatur und/oder von einer von einem Benutzer ausgewählten Getränkesorte einstellbar ist.

13. Verfahren zur Erzeugung eines schaumförmigen Milch/Luft-Gemischs, welches insbesondere mit einer Vorrichtung (1) nach einem der zuvor genannten Ansprüche durchführbar ist, mit den nachfolgenden Verfahrensschritten:
a. Ansaugen von Milch über eine Förderleitung (3) aus einem Vorratsbehälter (4) und Leiten der angesaugten Milch in eine Aufschäumeinheit (14);
b. Beimischen von Luft zu der Milch;
c. Bestimmen einer der Milch beigemischten Luftmenge mit einem an einer Luftzuleitung (8) angeordneten Sensor (12);
d. Anpassen der Luftmenge an einen von einer Steuereinheit (25) vorgegebenen Sollwert für die Luftmenge; und
e. Aufschäumen des Milch/Luft-Gemischs mit der Aufschäumeinheit (14),
wobei die Luftmenge in dem Verfahrensschritt c) anhand des der Milch zugeführten Luftvolumens bestimmt wird, welches mit einem Volumenstromsensor (12) ermittelt wird, indem die vorbeiströmende Luft mit einem Heizelement (1233) erhitzt und mit einem ersten (1231) in Luftströmungsrichtung vor dem Heizelement und einen zweiten (1232) in Luftströmungsrichtung hinter dem Heizelement angeordneten Temperatursensor eine Temperaturdifferenz zwischen den beiden Temperatursensoren ermittelt wird.

14. Verfahren nach Anspruch 13, bei welchem die Steuereinheit (25) zur Anpassung der Luftmenge an den Sollwert in dem Verfahrensschritt d) einen Luftvolumenstrom durch einen in der Luftzuleitung (8) angeordneten, steuerbaren Luftzufuhrbegrenzer (10) und/oder eine der Aufschäumeinheit (14) zugeleiteten Milchfördermenge variiert wird.

## Claims

1. Device (1) for generating a foamy milk/air mixture, having a foaming unit (14), a feed line (3) in fluid-conducting communication with the foaming unit (14) for taking in milk from a storage container (4) and supplying the milk to the foaming unit (14), an air supply line (8) for mixing air into the milk, and a controllable air supply limiter (10) which is arranged in the air supply line (8), wherein
the device (1) has a sensor (12) for determining an air quantity mixed with the milk, which sensor is arranged in the air supply line (8), and a programmable control unit (25) for adapting the air quantity determined by the sensor (12) to a desired value specified by the control unit (25),
**characterised in that**
the sensor (12) is a volumetric flow sensor which, in the direction of air supply, is arranged either upstream of the air supply limiter (10) or between the air supply limiter (10) and the foaming unit (14), and the volumetric flow sensor (12) has a heating element (1233), a first temperature sensor (1231) arranged upstream of the heating element in the direction of air flow and a second temperature sensor (1232) arranged downstream of the heating element in the direction of air flow.

2. Device (1) according to claim 1, wherein the foaming unit has a first controllable pump (2), which is in fluid-conducting communication with the feed line (3), and a pressure-increasing element (13), which is arranged on the pressure side of the first pump (2), wherein the air supply line (8) opens into the feed line (3) on the suction side of the first pump (2).

3. Device (1) according to claim 1, wherein the foaming unit (14) comprises a second controllable pump (27), which on the suction side is in fluid-conducting communication with the feed line (3), and a foaming chamber (28), which is arranged on the pressure side of the second pump (27), the foaming chamber (28) being in fluid-conducting communication with a vapour supply line (231) into which the air supply line (8) opens.

4. Device (1) according to any one of the afore-mentioned claims, wherein the heating element (1233), the first temperature sensor (1231) and the second temperature sensor (1232) are integrated into a MEMS sensor chip (123).

5. Device (1) according to claim 1, wherein the volumetric flow sensor (12) has a measuring range for measurement of a volumetric air flow of from -3 to 3 I/min, preferably from -2 to 2 l/min, especially preferably from -1 to 1 l/min.

6. Device (1) according to any one of the afore-mentioned claims, wherein to adapt the air quantity determined by the sensor (12) to the desired value, the volumetric air flow through the air supply limiter (10) and/or a fed quantity of milk supplied to the foaming unit (14) is variable by means of the control unit (25).

7. Device (1) according to any one of the afore-mentioned claims, wherein the air flow limiter (10) is an air valve, especially a proportional valve or an intermittent air valve.

8. Device (1) according to claim 2 or 3, wherein the first controllable pump (2) or the second controllable pump (27) is in the form of a gear pump, the fed quantity of milk being variable by controlling a pump speed of the gear pump, especially by means of pulse width modulation.

9. Device (1) according to any one of the afore-mentioned claims, wherein a flow meter (5) for determining the fed quantity of milk is arranged in the feed line (3) upstream of the foaming unit (14) in the milk feed direction, preferably on the suction side of the first pump (2) or the second pump (27).

10. Device (1) according to any one of claims 2 to 9, wherein the pressure-increasing element (13) is in the form of a static mixer, especially a helical mixer, in the form of a resistance flow element or in the form of a throttle.

11. Device (1) according to any one of the afore-mentioned claims, which, for heating the foamy milk/air mixture, has a continuous-flow heater (15) and/or steam inlet (243) arranged downstream of the foaming unit (14) in the dispensing direction for the foamy milk/air mixture.

12. Device (1) according to any one of the afore-mentioned claims, wherein the desired value is adjustable in dependence upon a type of milk and/or milk temperature used for generating the foamy milk/air mixture and/or upon a type of beverage selected by a user.

13. Method for generating a foamy milk/air mixture, which can especially be carried out using a device (1) according to any one of the afore-mentioned claims, having the following method steps:
a. taking in milk from a storage container (4) via a feed line (3) and conducting the taken-in milk into a foaming unit (14);
b. mixing air into the milk;
c. determining an air quantity mixed with the milk using a sensor (12) arranged on an air supply line (8);
d. adapting the air quantity to a desired value for the air quantity, which desired value is specified by a control unit (25); and
e. foaming the milk/air mixture using the foaming unit (14),
wherein in method step c) the air quantity is determined on the basis of the volume of air supplied to the milk, which volume is ascertained with a volumetric flow sensor (12) by heating the air flowing past it with a heating element (1233) and, with a first temperature sensor (1231) arranged upstream of the heating element in the direction of air flow and a second temperature sensor (1232) arranged downstream of the heating element in the direction of air flow, detecting a temperature difference between the two temperature sensors.

14. Method according to claim 13, wherein for adapting the air quantity to the desired value in method step d), a volumetric air flow through a controllable air supply limiter (10) arranged in the air supply line (8) and/or a fed quantity of milk supplied to the foaming unit (14) is varied by means of the control unit (25).

## Revendications

1. Dispositif (1) dévolu à la production d'un mélange mousseux lait/air, comprenant une unité de moussage (14) ; un conduit de refoulement (3) en communication fluidique avec l'unité de moussage (14), conçu pour aspirer du lait à partir d'un récipient de réserve (4) et pour canaliser le lait jusque dans ladite unité de moussage (14) ; un conduit (8) d'arrivée d'air, conçu pour ajouter de l'air dans le lait ; et un limitateur pilotable (10) d'afflux d'air, logé dans ledit conduit (8) d'arrivée d'air, sachant que
ledit dispositif (1) comporte un capteur (12) logé dans ledit conduit (8) d'arrivée d'air et conçu pour déterminer une quantité d'air adjointe au lait, et une unité de commande programmable (25) conçue pour adapter ladite quantité d'air, déterminée par ledit capteur (12), à une valeur de consigne préétablie par ladite unité de commande (25),
**caractérisé par le fait que**
le capteur (12) est un capteur de débits volumiques installé, dans la direction d'afflux de l'air, soit avant le limitateur (10) d'afflux d'air, soit entre ledit limitateur (10) d'afflux d'air et l'unité de moussage (14), et ledit capteur (12) de débits volumiques comporte un élément chauffant (1233) et des premier (1231) et second (1232) capteurs de températures implantés, respectivement, devant l'élément chauffant dans la direction de circulation de l'air et derrière ledit élément chauffant dans ladite direction de circulation de l'air.

2. Dispositif (1) selon la revendication 1, dans lequel l'unité de moussage comporte une première pompe pilotable (2), en communication fluidique avec le conduit de refoulement (3), et un élément (13) d'accroissement de pression qui est implanté côté pression de ladite première pompe (2), le conduit (8) d'arrivée d'air débouchant dans ledit conduit de refoulement (3) côté aspiration de ladite première pompe (2).

3. Dispositif (1) selon la revendication 1, dans lequel l'unité de moussage (14) inclut une seconde pompe pilotable (27) en communication fluidique avec le conduit de refoulement (3), côté aspiration, et une chambre de moussage (28) située côté pression de ladite seconde pompe (27), laquelle chambre de moussage (28) est en communication fluidique avec un conduit (231) d'afflux de vapeur, dans lequel le conduit (8) d'arrivée d'air débouche.

4. Dispositif (1) selon l'une des revendications précitées, dans lequel l'élément chauffant (1233), et les premier (1231) et second (1232) capteurs de températures, sont regroupés pour former une puce détectrice (123) à microsystème électromécanique (MEMS).

5. Dispositif (1) selon la revendication 1, dans lequel le capteur (12) de débits volumiques présente une plage de mesure affectée à la mesure d'un débit volumique d'air de -3 à 3 L/min, préférentiellement de -2 à 2 L/min, de -1 à 1 L/min avec préférence particulière.

6. Dispositif (1) selon l'une des revendications précitées, dans lequel le débit volumique d'air parcourant le limitateur (10) d'afflux d'air, et/ou une quantité de lait refoulée délivrée à l'unité de moussage (14), peu(ven)t être modifié(e)(s) en vue d'adapter au moyen de l'unité de commande (25), à la valeur de consigne, la quantité d'air déterminée par le capteur (12).

7. Dispositif (1) selon l'une des revendications précitées, dans lequel le limitateur (10) d'afflux d'air est une vanne d'air, en particulier une vanne à action continue ou une vanne pneumatique à action intermittente.

8. Dispositif (1) selon la revendication 2 ou 3, dans lequel la première pompe pilotable (2), ou la seconde pompe pilotable (27), est respectivement réalisée sous la forme d'une pompe à engrenage, la modification de la quantité de lait refoulée pouvant être effectuée par commande d'une vitesse angulaire de pompage de ladite pompe à engrenage, notamment au moyen d'une modulation de largeurs d'impulsions.

9. Dispositif (1) selon l'une des revendications précitées, dans lequel un débitmètre (5) est logé dans le conduit de refoulement (3), avant l'unité de moussage (14) dans la direction de refoulement du lait, de préférence côté aspiration de la première pompe (2) ou de la seconde pompe (27), en vue de déterminer la quantité de lait refoulée.

10. Dispositif (1) selon l'une des revendications 2 à 9, dans lequel l'élément (13) d'accroissement de pression est réalisé sous la forme d'un mélangeur statique, en particulier d'un mélangeur hélicoïdal, sous la forme d'un élément de résistance à l'écoulement, ou sous la forme d'un étranglement.

11. Dispositif (1) selon l'une des revendications précitées, comportant un réchauffeur (15) à flux continu, placé derrière l'unité de moussage (14) dans la direction de distribution dédiée au mélange mousseux lait/air, et/ou une admission (243) de vapeur d'eau en vue de réchauffer ledit mélange mousseux lait/air.

12. Dispositif (1) selon l'une des revendications précitées, dans lequel la valeur de consigne peut être réglée en fonction d'une variété de lait utilisée pour produire le mélange mousseux lait/air, et/ou d'une température du lait, et/ou d'une variété de boisson sélectionnée par un utilisateur.

13. Procédé de production d'un mélange mousseux lait/air, pouvant notamment être mis en oeuvre à l'aide d'un dispositif (1) conforme à l'une des revendications précitées, comprenant les étapes opératoires suivantes :
a. aspiration de lait à partir d'un récipient de réserve (4), par l'intermédiaire d'un conduit de refoulement (3), et canalisation du lait aspiré jusque dans une unité de moussage (14) ;
b. adjonction d'air au lait ;
c. détermination, à l'aide d'un capteur (12) implanté sur un conduit (8) d'arrivée d'air, d'une quantité d'air adjointe au lait ;
d. adaptation de la quantité d'air à une valeur de consigne assignée à ladite quantité d'air et préétablie par une unité de commande (25) ; et
e. moussage du mélange lait/air à l'aide de ladite unité de moussage (14),
sachant qu'à l'étape opératoire c), la quantité d'air est déterminée sur la base du volume d'air délivré au lait et spécifié à l'aide d'un capteur (12) de débits volumiques, sachant que l'air en circulation est chauffé à l'aide d'un élément chauffant (1233), et qu'à l'aide de premier (1231) et second (1232) capteurs de températures implantés, respectivement, devant l'élément chauffant dans la direction de circulation de l'air et derrière ledit élément chauffant dans ladite direction de circulation de l'air, une différence de température entre les deux capteurs de températures est spécifiée.

14. Procédé selon la revendication 13, dans lequel, en vue de l'adaptation de la quantité d'air à la valeur de consigne, à l'étape opératoire d), l'unité de commande (25) modifie un débit volumique d'air parcourant un limitateur (10) d'afflux d'air, logé dans le conduit (8) d'arrivée d'air, et/ou une quantité de lait refoulée délivrée à l'unité de moussage (14).
